# FASCICULE DE BREVET EUROPEEN

(11) **EP 0 634 522 B1**
(45) Date de publication et mention de la délivrance du brevet: **22.01.1997**
(21) Numéro de dépôt: 94420190.4
(22) Date de dépôt: 07.07.1994
(51) Int. Cl.: D21D 1/30

(54) **Plaque de défibrage ou de raffinage de pâte à papier, et procédé pour sa réalisation**
Zerkleinerungs- oder Raffinationsscheibe für Papierfaserbrei sowie Verfahren zu seiner Herstellung
Defibrating- or refining disk for paper pulp and process for making the same

(30) Priorité: 13.07.1993 FR 9308791
(43) Date de publication de la demande: 18.01.1995
(73) Titulaire: TECHNOGENIA S.A., 74410 Saint-Jorioz (FR)
(72) Inventeur: Maybon, Guy, F-74410 Saint Jorioz (FR)
(74) Mandataire: Poncet, Jean-François

(56) Documents cités:
- EP-A- 0 480 851
- WO-A-91/02841
- WO-A-92/11941

## Description

La présente invention concerne les plaques de défibrage ou de raffinage de pâte à papier, comportant une surface de broyage destinée à résister à l'abrasion et à défaire les agrégats de fibre.

Dans les machines de défibrage ou de raffinage de la pâte à papier, par exemple telles que celles décrites dans les brevets US-A-3 117 603 ou US-A-4 423 845, deux plateaux tournant l'un par rapport à l'autre portent chacun un assemblage de plaques sectorielles disposées en couronne circulaire, les faces travaillantes des plaques étant munies de rainures généralement radiales et étant constituées par une matière abrasive, par exemple de l'alumine, de l'oxyde de zirconium ou du carbure de silicium. Ainsi, la surface de broyage présente un nombre important de nervures séparées par des rainures, la forme des nervures et rainures étant soigneusement choisie pour obtenir un effet de défibrage de pâte à papier. La matière insérée entre les plaques s'écoule dans les rainures radiales, et la forme, l'espacement et la direction des rainures déterminent le calibrage des fibres de pâte à papier que l'on désire obtenir. Ainsi, la plaque doit présenter une grande précision dimensionnelle et de position.

Les plaques de raffinage et de défibrage qui sont actuellement les plus utilisées sont réalisées soit en fontes alliées dites fontes NIHARD, soit en aciers inoxydables.

Lors de l'utilisation, les nervures des plaques tendent à s'user, par l'effet abrasif des fibres de pâte à papier ou des matériaux abrasifs qu'elle contient. La déformation progressive des nervures qui en résulte rend la plaque impropre à l'usage après une durée d'usage qui n'est généralement pas très longue.

Les plaques en fontes alliées sont réalisées par moulage. Après usure, elles doivent être jetées.

Les plaques en aciers inoxydables s'usent relativement plus vite, mais elles peuvent être retaillées après usage une ou deux fois, de façon à restaurer le profil initial des rainures. Le retaillage tend toutefois à réduire la résistance mécanique des plaques, et constitue une opération onéreuse.

Pour prolonger la durée de vie des plaques de raffinage ou de défibrage de la pâte à papier, on a proposé de profiter des propriétés avantageuses de matériaux plus durs tels que des grains de carbure de tungstène.

Ainsi, le document EP-A-0 480 851 propose de réaliser une plaque de broyage ou de raffinage à surface antiabrasion par moulage avec infiltration à chaud d'un alliage de brasage à l'état fondu dans un empilement de grains de carbure de tungstène. Cette technique nécessite un moule, et n'est donc pas applicable pour le rechargement d'une plaque de broyage ou de raffinage existante.

Le document WO-A-91 02841 propose de réaliser une couche superficielle abrasive sur une plaque de raffinage, en faisant fondre par un rayon laser la couche superficielle du substrat en acier et en projetant sur la couche superficielle fondue un matériau abrasif tel que le carbure de tungstène sous forme de poudre dont le diamètre est compris entre 120 microns et 2,5 millimètres. La couche ainsi réalisée est abrasive, et d'épaisseur nécessairement réduite car une seule passe de fusion et de projection est possible. Un tel traitement tend à réduire la résistance mécanique du substrat, en diminuant l'épaisseur de sa partie métallique homogène. Et la couche superficielle ne présente pas de bonnes propriétés antiabrasion.

Le document WO-A-92 11941 propose de réaliser une plaque de raffinage à couche antiabrasion par pressage isostatique à froid d'un mélange de poudre de carbure de tungstène et de poudre d'alliage de fer, nickel, chrome, carbone et molybdène. La teneur en carbure de tungstène est limitée, comprise entre 10 % et 50 % en poids du mélange de poudres. Cette technique nécessite un moule et une installation onéreuse de pressage à très haute pression, et n'est donc pas applicable pour le rechargement d'une plaque de défibrage ou de raffinage existante.

Le problème proposé par la présente invention est de concevoir une nouvelle structure de plaque de défibrage ou de raffinage de pâte à papier, et un procédé pour sa réalisation, la plaque présentant des qualités améliorées de résistance à l'abrasion, sans réduire la résistance mécanique du corps de la plaque, et en recherchant une meilleure efficacité de la plaque lors de son usage.

En particulier, l'invention vise à augmenter la résistance à l'abrasion des sommets de nervures qui sont les zones les plus sollicitées de la plaque, tout en favorisant l'écoulement de la pâte à papier à l'intérieur des rainures.

Pour cela, l'idée à la base de l'invention est de recharger sélectivement le sommet des nervures avec un matériau antiabrasion approprié, tout en conservant de préférence la base des nervures et le fond des rainures en un matériau favorisant l'écoulement de la pâte à papier. L'écoulement se trouve amélioré par l'effet de polissage que produit la pâte à papier lors de son écoulement.

La difficulté est alors d'effectuer un tel rechargement à un coût raisonnable, tout en assurant une bonne homogénéité du rechargement et une bonne adhérence du rechargement sur le corps de la plaque, avec un matériau de rechargement contenant une proportion importante de matière dure antiabrasion, selon une épaisseur de rechargement suffisante, et sans déformer le corps de la plaque pour conserver une bonne précision de la forme géométrique de plaque.

La solution selon l'invention consiste à recharger préférentiellement les seuls sommets des nervures de plaques au moyen d'un faisceau laser associé à un injecteur de poudres.

Ainsi, une plaque de défibrage ou de raffinage de pâte à papier selon l'invention comprend un corps de plaque comportant une surface de broyage présentant un nombre important de nervures séparées par des rainures, et telle que :
- le corps de plaque est constitué d'un premier matériau adapté pour assurer la tenue mécanique générale de la plaque en utilisation,
- la partie supérieure des nervures est constituée d'une couche d'un matériau composite comprenant des grains de matière dure antiabrasion,
- la couche de matériau composite formant la partie supérieure des nervures est à base de poudre de matière dure antiabrasion liée dans un alliage métallique de brasage dont les caractéristiques de fusion et de soudabilité sont appropriées pour un rechargement au laser sur le premier matériau.

Une telle constitution de partie supérieure des nervures met à profit les propriétés antiabrasion de la matière dure antiabrasion et de l'alliage métallique de brasage, qui sont plus durs que le premier matériau formant le corps de plaque. Cette constitution se traduit toutefois, en cours de fonctionnement, par l'apparition d'une relative rugosité, par suite de l'émergence progressive des grains durs au-dessus de la matrice d'alliage qui les lie.

Cette relative rugosité produit un effet "fibrillant", qui permet d'augmenter les propriétés mécaniques du papier réalisé à partir d'une pâte à papier ainsi raffinée.

Cette constitution de partie supérieure des nervures met également à profit les bonnes propriétés fusibles de l'alliage de brasage, qui lie les grains de matière dure antiabrasion en formant une matrice homogène et mécaniquement résistante, qui peut lier efficacement les grains même lorsque ceux-ci sont en proportion supérieure à 50 % en poids, et dont la température de fusion relativement basse protège les grains de matière dure antiabrasion d'un échauffement excessif pouvant les détériorer.

Le corps de plaque ainsi que la partie inférieure des nervures et le fond des rainures peuvent être en fonte ou en acier inoxydable. On conserve ainsi les bonnes propriétés de l'état de surface en acier inoxydable ou en fonte des fonds de rainures, pour faciliter l'écoulement de la pâte à papier dans lesdites rainures.

Le matériau composite formant la partie supérieure des nervures peut avantageusement être formé de grains de carbure de tungstène liés dans un alliage métallique à base de nickel, de chrome, de silicium, de fer et de bore.

L'invention prévoit un procédé de réalisation d'une plaque de défibrage ou de raffinage de pâte à papier, la plaque comprenant un corps de plaque en un premier matériau adapté pour assurer la tenue mécanique générale de la plaque en utilisation, le corps de plaque comprenant une surface de broyage présentant un nombre important de nervures séparées par des rainures. Le procédé selon l'invention comprend une étape de rechargement au laser des faces supérieures des nervures du corps de plaque, au moyen d'un générateur de faisceau laser dirigeant un faisceau laser selon une zone d'impact se déplaçant par balayage sur les faces supérieures des nervures à recharger et associé à un injecteur de poudre dirigeant sur la zone d'impact du faisceau laser une poudre contenant des grains de matière dure antiabrasion et d'alliage métallique de brasage susceptible de fondre sous le faisceau laser et de se souder sur ledit premier matériau en adhérant sur les grains formant la poudre de matière dure antiabrasion, le faisceau laser ayant une intensité suffisante pour fondre superficiellement le premier matériau et pour fondre la poudre d'alliage métallique de brasage dans la zone d'impact.

Le rechargement de chaque nervure peut avantageusement s'effectuer en plusieurs passes successives, au cours desquelles on déplace la zone d'impact de faisceau laser et de poudre sur toute la longueur de la nervure, alternativement dans un sens et dans l'autre, le faisceau laser étant focalisé à chaque passe selon une zone d'impact peu supérieure à la largeur de nervure, l'inversion de mouvement du faisceau laser s'effectuant au-delà des extrémités de la nervure. On peut ainsi augmenter encore l'épaisseur du rechargement.

L'intérêt du procédé est alors de pouvoir réaliser un rechargement excédentaire, d'épaisseur plus importante, que l'on peut réduire ensuite par rectification pour recréer des arêtes latérales nettes de nervures.

D'autres objets, caractéristiques et avantages de la présente invention ressortiront de la description suivante de modes de réalisation particuliers, faite en relation avec les figures jointes, parmi lesquelles:
- la figure 1 illustre, en vue de dessus, une forme particulière de disque de raffinage ou de défibrage de pâte à papier pouvant être produite selon l'invention ;
- la figure 2 illustre en vue de dessus une plaque sectorielle de défibrage ou de raffinage de pâte à papier pouvant être produite selon l'invention ;
- la figure 3 illustre un dispositif de rechargement au laser pour la mise en oeuvre de la présente invention ;
- la figure 4 est une vue schématique montrant une buse d'injection de poudre coaxiale avec le faisceau laser ;
- la figure 5 illustre le déplacement de la buse coaxiale et du faisceau laser pour le rechargement d'une nervure de plaque selon l'invention ;
- la figure 6 et la figure 7 illustrent le déplacement d'une buse latérale et du faisceau laser associé pour le rechargement selon l'invention dans un autre mode de réalisation ;
- la figure 8 illustre, en coupe transversale, les rechargements successifs d'une nervure de plaque selon l'invention ;
- la figure 9 illustre, en coupe transversale, la structure interne d'un rechargement de nervure selon l'invention après rectification ;
- la figure 10 illustre le déplacement du point de focalisation du faisceau laser selon un premier mode de réalisation de l'invention ;
- la figure 11 illustre le déplacement du point de focalisation du faisceau laser selon un second mode de réalisation de l'invention ;
- la figure 12 est une coupe transversale montrant, à faible échelle, le détail de la zone interfaciale d'un dépôt laser selon l'invention ;
- les figures 13 à 15 illustrent les mouvements relatifs de la pièce à recharger et du faisceau laser sur une nervure à recharger ;
- la figure 16 illustre, en coupe transversale, la succession des nervures sur une plaque rechargée selon la présente invention ; et
- la figure 17 est une vue de côté montrant une nervure rechargée selon l'invention, avec une zone intermédiaire d'interruption de rechargement au moyen d'un cache.

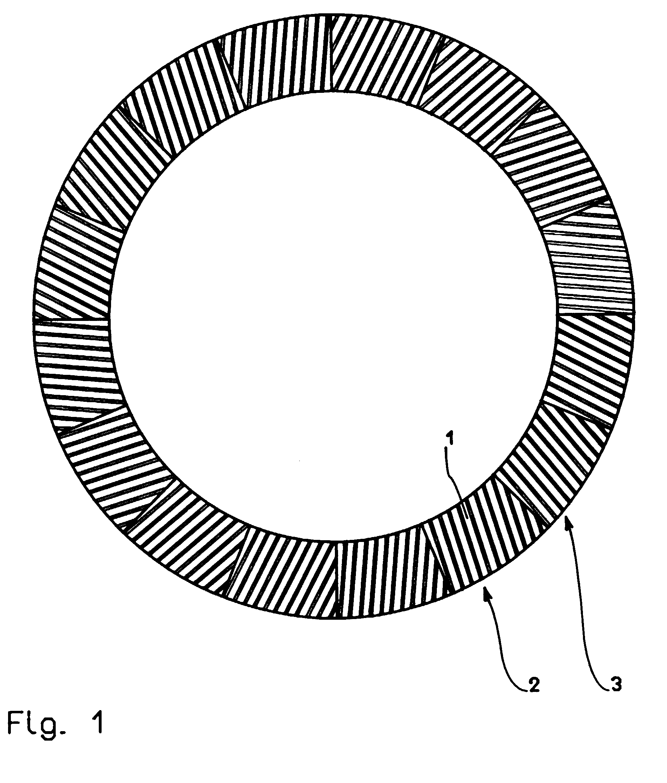

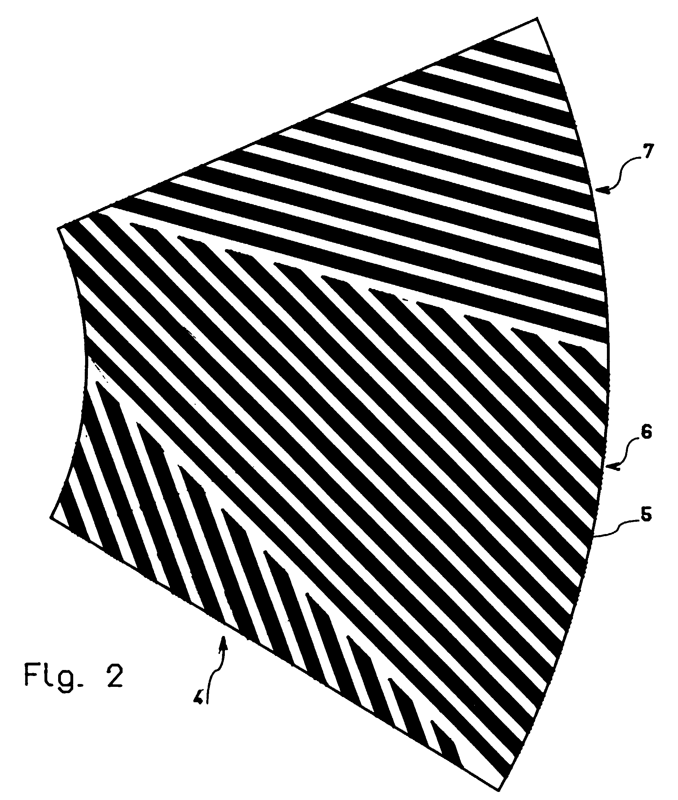

Comme le représentent les figures 1 et 2, en vue de dessus, les plaques de défibrage ou de raffinage de pâte à papier comprennent une surface de broyage présentant un nombre important de nervures séparées par des rainures.

Sur la figure 1, la plaque est sous forme d'une couronne continue, et la surface supérieure de broyage comprend des nervures telles que la nervure 1, réparties en groupes de nervures parallèles les unes aux autres, chaque groupe formant un secteur tel que le secteur 2 ou le secteur 3, les nervures de deux secteurs adjacents 2 et 3 ayant des orientations différentes. Une telle plaque peut être réalisée d'une seule pièce, avec un corps de plaque constitué en un premier matériau tel que l'acier inoxydable, adapté pour assurer la tenue mécanique générale de la plaque en utilisation. La partie supérieure des nervures est constituée d'une couche d'un matériau composite à base de poudre de matière dure antiabrasion liée dans un alliage métallique de brasage dont les caractéristiques de fusion et de soudabilité sont appropriées pour un rechargement au laser sur le premier matériau.

Dans le mode de réalisation de la figure 2, la plaque de défibrage ou raffinage de pâte à papier est un secteur de couronne, plusieurs secteurs identiques pouvant être solidarisés les uns à la suite des autres sur une base en couronne pour former un élément similaire à celui de la figure 1. Le secteur 4 de la figure 2 est également formé de séries de nervures parallèles telles que la nervure 5, les nervures parallèles entre elles étant réparties en plusieurs groupes, par exemple un premier groupe 6 et un second groupe 7. Dans chaque groupe, les nervures sont parallèles les unes aux autres, les nervures de deux groupes adjacents 6 et 7 présentant des orientations différentes. Dans ce second mode de réalisation de la figure 2, le corps de plaque peut être constitué en une fonte, la partie supérieure des nervures étant constituée d'une couche de matériau antiabrasion similaire de celle du mode de réalisation de la figure 1.

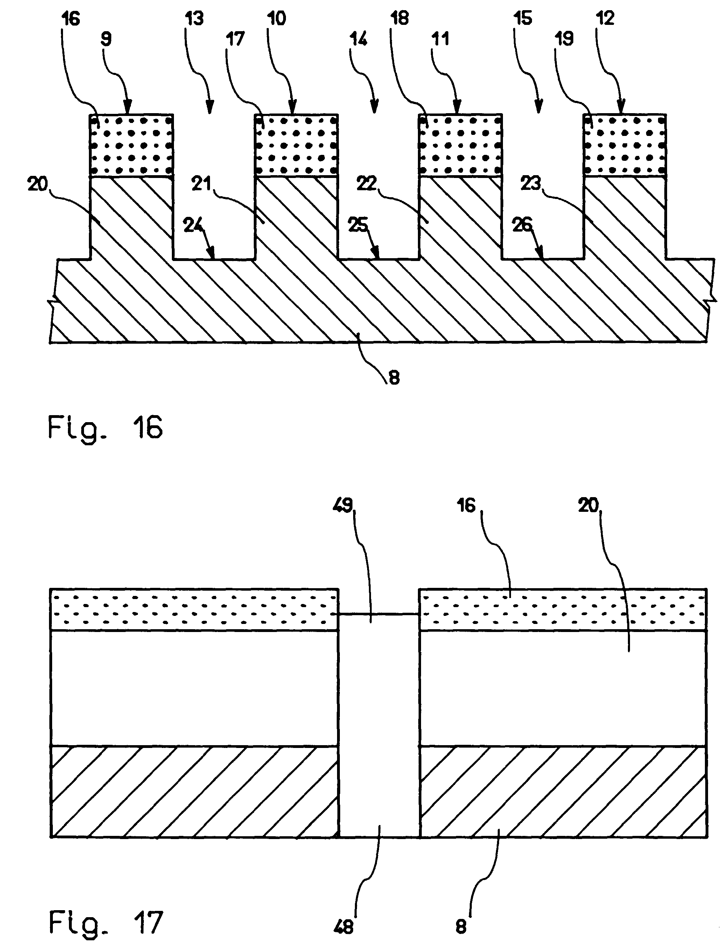

Ainsi, comme illustré en coupe transversale sur la figure 16, le corps de plaque 8 d'une plaque de défibrage ou de raffinage de pâte à papier selon l'invention est constitué d'un premier matériau tel que l'acier inoxydable ou la fonte, assurant la tenue mécanique générale de la plaque en utilisation. On distingue, sur la figure, quatre nervures respectivement 9, 10, 11 et 12, séparées par des rainures respectivement 13, 14 et 15. La partie supérieure, respectivement 16, 17, 18 et 19, des nervures 9 à 12 est constituée d'une couche d'un matériau composite à base de poudre de matière dure antiabrasion liée dans un alliage métallique. Ce matériau composite formant la partie supérieure des nervures 9 à 12 peut avantageusement être formé de grains de carbure de tungstène liés dans un alliage métallique de brasage à base de nickel, de chrome, de silicium, de fer et de bore.

Le pourcentage en poids de carbure de tungstène dans le matériau composite peut avantageusement être compris entre 50 % et 70 %. Une telle proportion importante de carbure de tungstène, supérieure à 50 % en poids, est rendue possible par le procédé de rechargement selon la présente invention.

Le carbure de tungstène peut avantageusement être sous forme de grains de carbure de tungstène fondu, sensiblement sphériques.

Le corps de plaque 8, en acier inoxydable ou en fonte, forme la partie inférieure 20 à 23 des nervures 9 à 12 respectivement, ainsi que le fond 24 à 26 des rainures 13 à 15 respectivement.

La partie supérieure de nervure en matériau antiabrasion a généralement une hauteur d'environ 1 millimètre, tandis que la partie inférieure de nervure en acier ou en fonte a généralement une hauteur d'environ 6 à 8 millimètres, dépendant des types de plaque.

Pour réaliser une telle plaque de défibrage ou de raffinage de pâte à papier, on part d'un corps de plaque 8, qui est soit un corps de plaque neuf, soit une plaque déjà usagée dont les nervures ont été partiellement usées par la pâte à papier abrasive. On effectue le rechargement au laser des faces supérieures des nervures de ce corps de plaque, au moyen d'un générateur de faisceau laser balayant les arêtes supérieures à recharger et associé à une buse de projection de poudre dirigeant sur la zone d'impact du faisceau laser une poudre à base de matière dure antiabrasion et d'alliage métallique susceptible de fondre sous le faisceau laser et de se souder sur le matériau formant le corps de plaque 8.

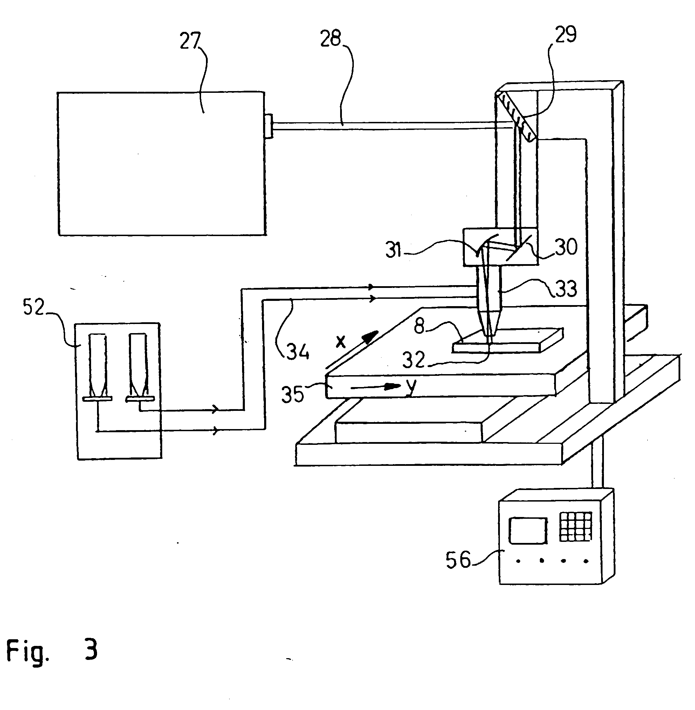

La figure 3 illustre schématiquement une installation de rechargement laser qui peut être utilisée selon l'invention. Cette installation comprend un laser de puissance 27 qui délivre un faisceau 28 de lumière cohérente et monochromatique. Le faisceau 28 se propage dans une seule direction, de façon homogène, et présente une seule longueur d'onde. La divergence du faisceau est très faible.

Un jeu de miroirs de renvoi 29 et 30 permet de transporter le faisceau jusque sur une tête de focalisation 31. La tête de focalisation 31 renvoie le faisceau laser sur la surface à recharger du corps de plaque 8. La tête de focalisation 31 est adaptée pour focaliser le faisceau laser, de façon que celui-ci frappe le corps de plaque 8 selon une zone d'impact 32 de faible surface, par exemple une surface présentant un diamètre compris entre 0,5 et 5 millimètres environ.

Un distributeur de poudre 52 sert de réservoir contenant une poudre de matériau destiné à former le rechargement sur le corps de plaque. Cette poudre contient des grains de matière dure antiabrasion destinés à conserver leur état solide sous le faisceau laser, et des grains d'alliage de brasage destinés à fondre sous le faisceau laser. Le distributeur de poudre 52 est adapté pour fluidifier la poudre à l'aide d'un gaz neutre tel que l'argon ou l'hélium, et pour la transporter pneumatiquement vers une buse de projection 33 par des canalisations 34 d'amenée de poudre. La buse de projection 33 est adaptée pour mettre en forme le jet de poudre fluidifié en sortie de buse, pour produire un jet de poudre convergeant venant frapper la même zone d'impact 32 du corps de plaque 8. Le jet de poudre fluidifié en sortie de buse doit se confondre le plus possible avec la forme du faisceau laser 28 dans cette même zone.

Le distributeur de poudre 52 est d'un type permettant de contrôler précisément le débit massique de poudre, pour obtenir une excellente reproductibilité et une régularité parfaite du débit, paramètres qui ont une influence directe sur la régularité et la qualité des rechargements obtenus.

Le faisceau laser est orienté pour être proche de la verticale de la surface de corps de plaque 8 à recharger. L'orifice de sortie de buse 33 est maintenu à une distance constante de la surface à recharger, environ 10 millimètres.

Le corps de plaque 8 est placé sur une table 35 qui est déplacée dans le plan horizontal selon deux directions X et Y par des moyens d'entraînement pilotés par une commande numérique 56. Par ce déplacement, la zone d'impact 32 du faisceau laser et de la poudre sortant de la buse de projection 33 est déplacée progressivement sur la surface du corps de plaque 8 à recharger.

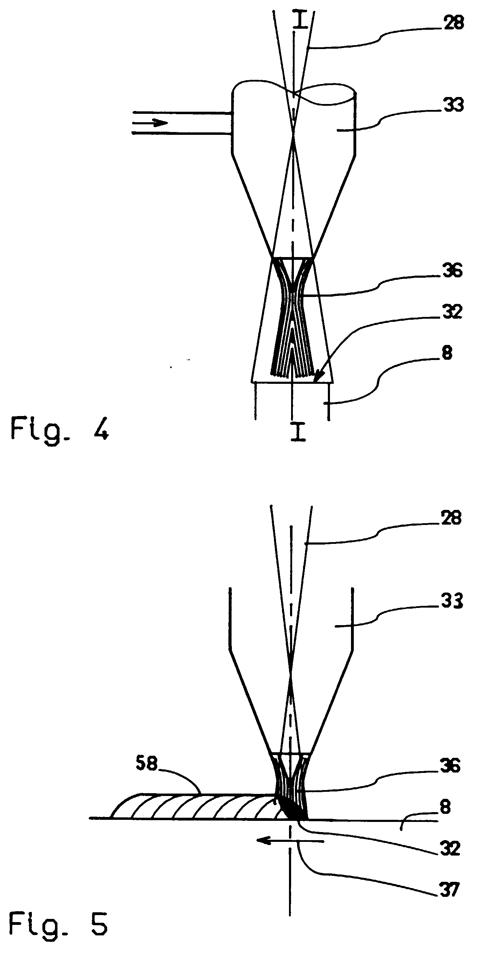

Dans le mode de réalisation illustré sur la figure 4, la buse de projection 33 est d'un premier type assurant une projection coaxiale avec l'axe I-I du faisceau laser 28. Dans cette buse coaxiale 33, la poudre fluidifiée est amenée selon un mouvement hélicoidal coaxial au faisceau laser 28, et il concentre le jet de poudre 36 pour concentrer la zone d'impact de la poudre sur la zone d'impact 32 du faisceau laser 28 sur le corps de plaque 8 à recharger. Cette zone d'impact 32 se situe au sommet d'une nervure.

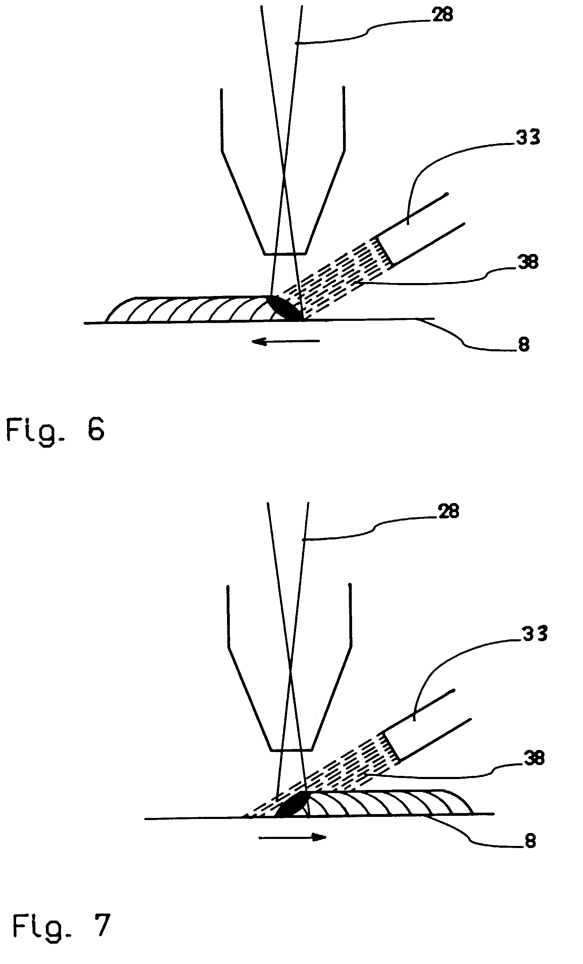

La figure 5 illustre le rechargement progressif, par déplacement du corps de plaque 8 dans la direction 37. Dans la zone d'impact 32, le faisceau laser 28 fait fondre la poudre d'alliage de brasage, qui se soude au corps de plaque 8 en liant les grains de matière dure antiabrasion et forme progressivement, après refroidissement, un cordon de dépôt 58 sur le sommet de la nervure en cours de rechargement.

Dans le mode de réalisation représenté sur les figures 6 et 7, la buse de projection 33 est une buse à injection latérale, qui amène la poudre avec un angle donné par rapport au faisceau laser 28. De préférence, le jet de poudre 38 est orienté dans le plan vertical passant par la nervure à recharger. Le déplacement du corps de plaque 8 s'effectue dans l'un ou l'autre sens longitudinal de la nervure, comme le représentent les figures.

L'énergie transportée par le faisceau laser 28 permet la fusion superficielle du corps de plaque 8 dans la zone 32 d'impact, et la fusion de la poudre d'alliage de brasage. La poudre arrive ainsi partiellement fondue sur la surface du corps de plaque 8. La poudre d'alliage se trouve piégée à la surface et continue de fondre pendant le temps d'interaction du faisceau laser 28 avec le corps de plaque 8, formant ainsi un dépôt.

Pour réaliser un tel rechargement parfaitement adapté sur la surface supérieure des nervures, on doit régler le faisceau laser pour que la zone d'impact 32 présente un diamètre sensiblement égal à la largeur de la nervure à recharger.

L'épaisseur du dépôt est comprise entre 0,3 millimètre et 1,5 millimètres lors d'une première passe. Les vitesses de traitement peuvent aller de quelques centimètres par minute à quelques mètres par minute, selon la valeur de la puissance du laser 27. Ainsi, on peut recharger une nervure par une seule passe, si l'épaisseur du dépôt réalisé est suffisante.

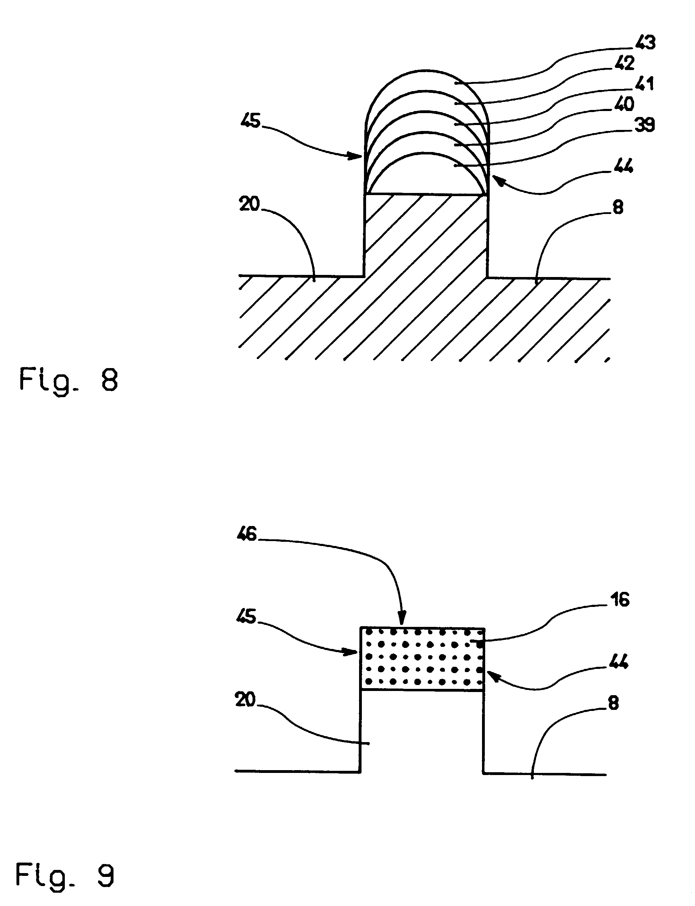

Pour réaliser un rechargement plus épais, le rechargement d'une nervure s'effectue en plusieurs passes successives au cours desquelles on déplace la zone d'impact 32 de faisceau laser et de poudre sur toute la longueur de la nervure, alternativement dans un sens et dans l'autre. Le faisceau laser 28 est focalisé à chaque passe selon une zone d'impact 32 peu supérieure à la largeur de la nervure. Par ces passes successives, effectuées par déplacement dans le sens longitudinal de la nervure, avec un faisceau laser frappant perpendiculairement le haut de nervure, et avec une buse de projection coaxiale ou dans l'axe de la nervure, on réalise un dépôt épais multicouche sans modification de la largeur initiale de la nervure. Ce dépôt multicouche est illustré par exemple sur la figure 8, sur laquelle on distingue le corps de plaque 8, la base 20 de la nervure, et une succession de couches de rechargement, par exemple cinq couches 39 à 43 respectivement. Les flancs 44 et 45 sont en alignement des côtés de la base de nervure 20, comme représenté sur les figures, pratiquement sans débordement ni creusement.

Il suffit ensuite de rectifier la face supérieure du rechargement, pour réaliser une section de nervure rectangulaire comme représenté sur la figure 9, avec une base 20 dans le premier matériau formant le corps 8 de plaque, par exemple en acier inoxydable ou en fonte, et avec une couche supérieure 16 de matériau de rechargement antiabrasion dont les flancs 44 et 45 suivent les flancs de la base 20, et dont la surface supérieure 46 est rectifiée à la hauteur des autres nervures. A l'intérieur de la couche 16 de rechargement, on constate qu'il n'y a pas de défauts d'homogénéité provoqués par la réalisation du dépôt multicouche. La répartition des grains de matière dure antiabrasion tels que les grains de carbure de tungstène est uniforme dans la matrice métallique, quel que soit le nombre de couches déposées.

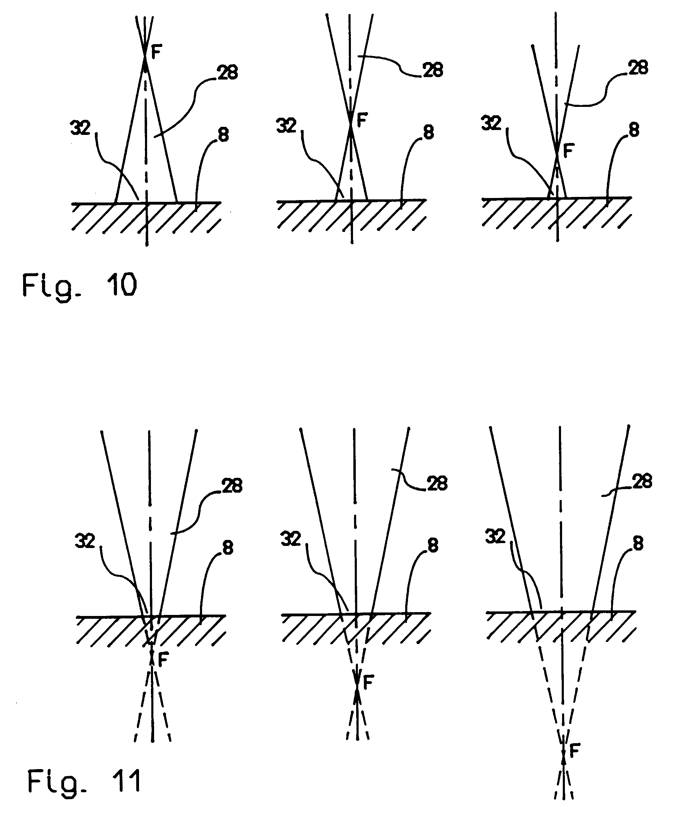

La figure 10 illustre un premier mode de réglage du faisceau laser 28, avec un point focal F situé au-dessus du corps de plaque 8 à recharger. En faisant varier la distance entre le point focal F et la surface du corps de plaque 8 à recharger, on règle le diamètre de la zone 32 d'impact du faisceau laser 28, comme illustré sur la figure.

La figure 11 illustre un second mode de réglage du faisceau laser 28. Dans ce second mode, le point focal F se situe au-dessous de la surface du corps de plaque 8 à recharger, et le réglage de la distance du point focal F à la surface du corps de plaque 8 permet également de régler la taille de la zone d'impact 32 du faisceau laser 28.

Dans tous les cas, on choisit le réglage de façon que la zone d'impact 32 ait un diamètre sensiblement égal ou peu supérieur à la largeur de nervure à recharger.

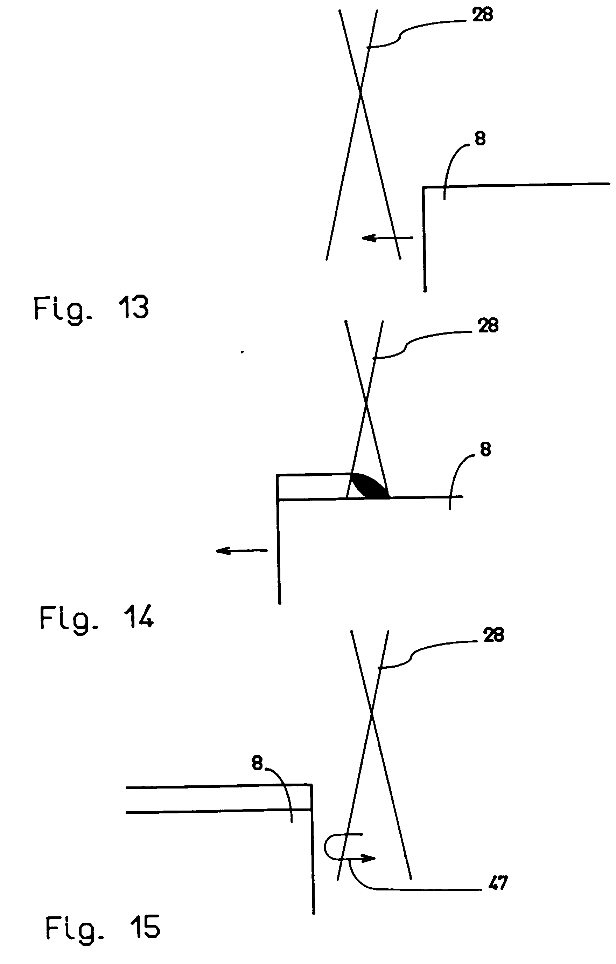

Comme le représentent les figures 13 à 15, l'inversion de mouvement relatif du faisceau laser 28 par rapport au corps de plaque 8 à recharger s'effectue au-delà des extrémités de la nervure en cours de rechargement. De même, l'allumage du faisceau laser 28 s'effectue au-delà de la nervure. Ainsi, sur la figure 13, le faisceau laser 28 est allumé avant que le corps de plaque 8 atteigne le faisceau, par déplacement selon la flèche représentée sur la figure. Par ce déplacement, sur la figure 14, on effectue le rechargement du sommet d'une nervure du corps de plaque 8. Sur la figure 15, le retournement de mouvement du corps de plaque 8, illustré par la flèche 47, s'effectue lorsque le faisceau laser 28 ne frappe plus le corps de plaque 8. Cette disposition permet d'éviter les effets de bords, au début du traitement et à chaque demi-tour en fin de nervure.

En outre, à chaque demi-tour, on modifie la position du point focal F de façon à compenser la hauteur du dépôt précédemment effectué, et maintenir ainsi un diamètre de zone d'impact 32 constant.

Dans certaines zones du corps de plaque 8, le rechargement doit être interrompu. Par exemple, la figure 17 illustre une structure de plaque avec un trou 48, par exemple pour le passage d'un boulon de fixation. Lorsqu'un tel trou 48 passe au droit d'une nervure, comme dans le cas représenté sur la figure, la couche supérieure rechargée 16 de la nervure doit être interrompue. Pour cela, en cours de rechargement, on introduit un cache 49 dans le trou 48, le cache 49 étant soit une matière réfléchissant le faisceau laser, soit en une matière absorbant le faisceau laser et susceptible de se dégrader à chaud. Le cache 49 peut par exemple être réalisé en cuivre, matière qui réfléchit le faisceau laser.

Le procédé selon l'invention a l'avantage d'assurer une bonne reproduction de la forme géométrique des nervures rechargées. En effet, le corps de plaque 8 est très peu affecté thermiquement par le chauffage du faisceau laser lors du rechargement, et sa déformation sous l'effet des dilatations thermiques est donc très faible, voire insensible.

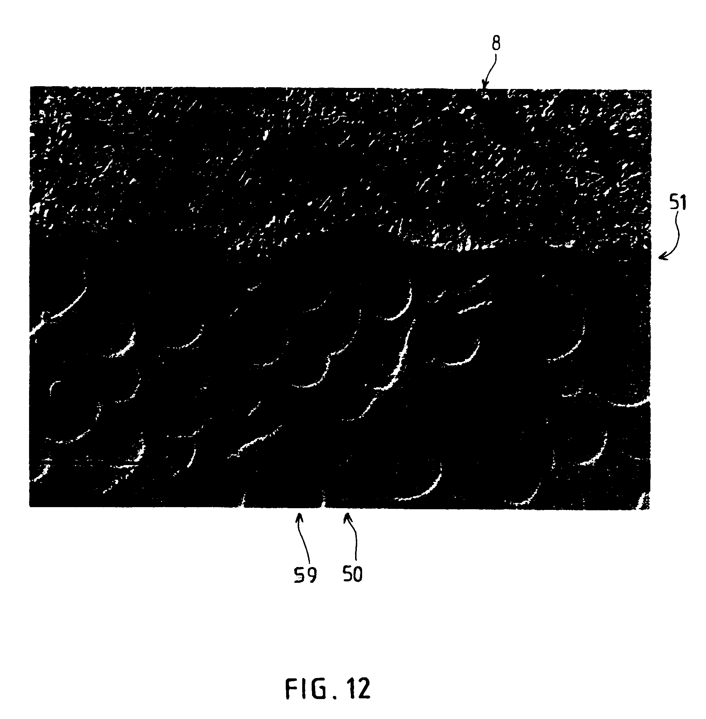

La liaison entre le rechargement et le corps de plaque 8 est excellente, puisqu'elle est obtenue par fusion superficielle du substrat. Il s'agit d'une liaison métallurgique qui confère au rechargement une très bonne adhérence. Les rechargements obtenus sont homogènes, sans porosité, et avec seulement une faible dilution du substrat. Ces caractéristiques sont illustrées par la figure 12, sur laquelle on distingue une répartition régulière des grains 59 de carbure de tungstène dans la matrice 50 métallique, et on distingue une couche 51 de faible épaisseur de liaison entre la matrice métallique et le substrat 8.

Les grains de carbure de tungstène 59 ne sont pas affectés par le traitement laser, contrairement à ce qui se passe lors d'une projection plasma. Les grains conservent ainsi toutes leurs propriétés mécaniques, et en particulier leur dureté n'est pas diminuée. On peut ainsi avantageusement utiliser un matériau antiabrasion à base de grains de carbure de tungstène fondu de forme générale sphérique.

Les vitesses de solidification très élevées obtenues du fait du traitement thermique très localisé entraînent au sein de la matrice de rechargement une microstructure très fine, et donc des propriétés mécaniques excellentes. En particulier, on obtient une grande dureté de la matrice métallique à base de nickel et de chrome, toujours supérieure à 600 HV.

La présente invention n'est pas limitée aux modes de réalisation qui ont été explicitement décrits, mais elle en inclut les diverses variantes et généralisations contenues dans le domaine des revendications ci-après.

## Revendications

1. Plaque de défibrage ou de raffinage de pâte à papier, comprenant un corps de plaque (8) comportant une surface de broyage présentant un nombre important de nervures (1, 5, 9-12) séparées par des rainures (13-15), dans laquelle :
- le corps de plaque (8) est constitué d'un premier matériau adapté pour assurer la tenue mécanique générale de la plaque en utilisation,
- la partie supérieure des nervures (9-12) est constituée d'une couche (16-19) de matériau composite comprenant des grains de matière dure antiabrasion,
caractérisée en ce que :
- la couche (16-19) de matériau composite formant la partie supérieure des nervures (9-12) est à base de poudre de matière dure antiabrasion liée dans un alliage métallique de brasage dont les caractéristiques de fusion et de soudabilité sont appropriées pour un rechargement au laser sur le premier matériau formant le corps de plaque (8).

2. Plaque de défibrage ou de raffinage selon la revendication 1, caractérisée en ce que le corps de plaque (8) est en fonte, ainsi que la partie inférieure (20-23) des nervures (9-12) et le fond des rainures (24-26).

3. Plaque de défibrage ou de raffinage selon la revendication 1, caractérisée en ce que le corps de plaque (8) est en acier inoxydable, ainsi que la partie inférieure des nervures (20-23) et le fond des rainures (24-26).

4. Plaque de défibrage ou de raffinage selon l'une quelconque des revendications 1 à 3, caractérisée en ce que le matériau composite formant la couche supérieure (16-19) des nervures (9-12) comprend des grains de carbure de tungstène liés dans un alliage métallique de brasage à base de nickel, de chrome, de silicium, de fer et de bore.

5. Plaque de défibrage ou de raffinage selon la revendication 4, caractérisée en ce que le pourcentage en poids de carbure de tungstène contenu dans le matériau composite est compris entre 50 % et 70 %.

6. Plaque de défibrage ou de raffinage selon l'une des revendications 4 ou 5, caractérisée en ce que le carbure de tungstène est sous forme de grains de carbure de tungstène fondu sensiblement sphériques.

7. Procédé de réalisation d'une plaque de défibrage ou de raffinage de pâte à papier, la plaque comprenant un corps de plaque (8) en un premier matériau adapté pour assurer la tenue mécanique générale de la plaque en utilisation, le corps de plaque comprenant une surface de broyage présentant un nombre important de nervures (1, 5, 9-12) séparées par des rainures (13-15), le procédé comprenant une étape de rechargement au laser des faces supérieures des nervures (9-12) au moyen d'un générateur (27) de faisceau laser dirigeant un faisceau laser (28) selon une zone d'impact (32) se déplaçant par balayage sur les faces supérieures des nervures à recharger et associé à une buse de projection de poudre (33) dirigeant sur la zone d'impact (32) du faisceau laser (28) une poudre contenant des grains de matière dure antiabrasion, le faisceau laser (28) ayant une intensité suffisante pour fondre superficiellement le premier matériau,
caractérisé en ce que la poudre contient en outre un alliage métallique de brasage susceptible de fondre sous le faisceau laser (28) et de se souder sur ledit premier matériau en adhérant sur les grains formant la poudre de matière dure antiabrasion, et en ce que le faisceau laser (28) a une intensité suffisante pour fondre la poudre d'alliage métallique de brasage dans la zone d'impact (32).

8. Procédé selon la revendication 7, caractérisé en ce que le rechargement d'une nervure s'effectue en plusieurs passes successives au cours desquelles on déplace la zone d'impact (32) de faisceau laser (28) et de poudre sur toute la longueur de la nervure, alternativement dans un sens et dans l'autre, le faisceau laser (28) étant focalisé à chaque passe selon une zone d'impact (32) peu supérieure à la largeur de la nervure, l'inversion de mouvement relatif du faisceau laser (28) par rapport au corps de plaque (8) s'effectuant au-delà des extrémités de la nervure.

9. Procédé selon l'une des revendications 7 ou 8, caractérisé en ce qu'on utilise des caches (49) en matière réfléchissant le faisceau laser (28), logés dans les zones (48) où l'on désire interrompre le rechargement.

10. Procédé selon l'une des revendications 7 ou 8, caractérisé en ce que l'on utilise des caches (49) en une matière absorbant le faisceau laser (28) et susceptible de se dégrader à chaud, logés dans les zones (48) où l'on désire interrompre le rechargement.

11. Procédé selon l'une quelconque des revendications 7 à 10, caractérisé en ce qu'on utilise une buse de projection de poudre (33) coaxiale au faisceau laser (28), permettant d'amener la poudre selon un mouvement hélicoïdal coaxial au faisceau laser (28) et de concentrer la zone d'impact de la poudre sur la zone d'impact (32) du faisceau laser (28) sur la nervure à recharger.

12. Procédé selon l'une quelconque des revendications 7 à 11, caractérisé en ce que la taille de la zone de rechargement est ajustée par réglage de la zone d'impact (32) du faisceau laser (28), en réglant la distance du point de focalisation (F) du faisceau laser (28) par rapport à la surface (8) à recharger.

## Patentansprüche

1. Zerkleinerungs- oder Refinerscheibe für Papierfaserbrei, die einen Scheibenkörper (8) aufweist, der eine Zerkleinerungsoberfläche trägt, die eine beträchtliche Anzahl von durch Rinnen (13-15) getrennte Rippen (1, 5, 9-12) aufweist, wobei:
- der Scheibenkörper (8) aus einem ersten Material besteht, das den generellen mechanischen Halt der Scheibe im Gebrauch gewährleistet,
- ein oberer Bereich der Rippen (9-12) aus einer Schicht (16-19) eines Kompositmaterials besteht, das Körner aus einem harten, abnutzungsfesten Material enthält,
dadurch gekennzeichnet, daß
die Schicht (16-19) aus Kompositmaterial, die den oberen Bereich der Rippen (9-12) bildet, auf einem Pulver aus hartem, abnutzungsfestem Material basiert, das in einer metallischen Hartlotlegierung gebunden ist, deren Schmelz- und Lötbarkeitseigenschaften für eine Nachbeschichtung des ersten den Scheibenkörper (8) bildenden Materials mittels eines Laserstrahls geeignet sind.

2. Zerkleinerungs- oder Refinerscheibe nach Anspruch 1, dadurch gekennzeichnet, daß der Scheibenkörper (8) ebenso wie der untere Bereich (20-23) der Rippen (9-12) und der Boden der Rinnen (24-26) aus Gußeisen bestehen.

3. Zerkleinerungs- oder Refinerscheibe nach Anspruch 1, dadurch gekennzeichnet, daß der Scheibenkörper (8) ebenso wie der untere Teil der Rippen (20-23) und der Boden der Rinnen (24-26) aus rostfreiem Stahl bestehen.

4. Zerkleinerungs- oder Refinerscheibe nach einem der Ansprüche 1 bis 3, dadurch gekennzeichnet, daß das die obere Schicht (16-19) der Rippen (9-12) bildende Kompositmaterial Körner aus Wolfram-Carbid enthält, die in einer metallischen Hartlotlegierung auf Basis von Nickel, Chrom, Silizium, Eisen und Bor gebunden sind.

5. Zerkleinerungs- oder Refinerscheibe nach Anspruch 4, dadurch gekennzeichnet, daß der Prozentsatz des Wolfram-Carbids in dem Kompositmaterial zwischen 50 und 70 Gewichts-% beträgt.

6. Zerkleinerungs- oder Refinerscheibe nach Anspruch 4 oder 5, dadurch gekennzeichnet, daß das WolframCarbid in Form von Wolfram-Carbid-Körnern vorgesehen ist, die im wesentlichen kugelförmig geschmolzen sind.

7. Verfahren zur Herstellung einer Zerkleinerungs- oder Refinerscheibe für Papierfaserbrei mit einem Scheibenkörper (8) aus einem ersten Material, das den generellen mechanischen Halt der Scheibe im Gebrauch gewährleistet, der eine Zerkleinerungsoberfläche aufweist, die eine beträchtliche Anzahl von Rippen (1, 5, 9-12) hat, die durch Rinnen (13-15) getrennt sind, wobei das Verfahren einen Schritt enthält zur Nachbeschichtung der Außenflächen der Rippen (9-12) durch einen Laser mittels eines Laserstrahlgenerators (27), der einen Laserstrahl (28) auf einer Auftreffzone (32) ausrichtet, die durch Abtastung auf den Oberflächen der nachzubeschichtenden Rippen verschoben wird und der einer Pulverspritzdüse (33) zugeordnet ist, die ein Pulver auf die Auftreffzone (32) des Laserstrahles (28) leitet, das Körner aus hartem, abnutzungsfestem Material enthält, wobei der Laserstrahl (28) eine ausreichende Intensität hat, um das erste Material an seiner Oberfläche zu schmelzen,
dadurch gekennzeichnet,
daß das Pulver zusätzlich eine metallische Hartlotlegierung enthält, die durch den Laserstrahl (28) zum Schmelzen gebracht wird und sich mit dem ersten Material verschweißt und dabei an den das Pulver aus hartem, abnutzungsfestem Material bildenden Körnern anhaftet; und
daß der Laserstrahl (28) eine ausreichende Intensität hat, um das Pulver der metallischen Hartlotlegierung in der Auftreffzone (32) zu schmelzen.

8. Verfahren nach Anspruch 7, dadurch gekennzeichnet, daß sich die Nachbeschichtung einer Rippe in mehreren aufeinanderfolgenden Durchgängen vollzieht, im Laufe derer die Auftreffzone (32) des Laserstrahles (28) und des Pulvers entlang der gesamten Länge der Rippe abwechselnd in der einen und in der anderen Richtung verschoben wird, wobei der Laserstrahl (28) bei jedem Durchlauf entlang einer gegenüber der Rippe leicht erhöhten Auftreffzone (32) fokussiert wird, und sich die Umkehrung der Relativbewegung des Laserstrahls (28) bezüglich des Scheibenkörpers (8) jenseits der Ränder der Rippe vollzieht.

9. Verfahren nach Anspruch 7 oder 8, dadurch gekennzeichnet, daß Masken (49) aus einem den Laserstrahl (28) reflektierenden Material verwendet werden, die in den Bereichen (48) angeordnet sind, in denen die Nachbeschichtung unterbrochen werden soll.

10. Verfahren nach Anspruch 7 oder 8, dadurch gekennzeichnet, daß Masken (49) aus einem den Laserstrahl (28) absorbierenden und erhitzbaren Material verwendet werden, die in den Bereichen (48) angeordnet sind, in denen die Nachbeschichtung unterbrochen werden soll.

11. Verfahren nach einem der Ansprüche 7 bis 10, dadurch gekennzeichnet, daß eine zum Laserstrahl (28) koaxiale Pulverspritzdüse (33) verwendet wird, die das Pulver in einer schraubenförmigen Bewegung koaxial zum Laserstrahl (28) mitführt und die Auftreffzone des Pulvers auf die Auftreffzone (32) des Laserstrahles (28) auf der nachzubeschichtenden Rippe konzentriert.

12. Verfahren nach einem der Ansprüche 7 bis 11, dadurch gekennzeichnet, daß die Größe der Nachbeschichtungszone durch Regelung der Auftreffzone (32) des Laserstrahles (28) eingestellt wird, indem die Entfernung des Fokussierungspunktes (F) des Laserstrahles (28) bezüglich der nachzubeschichtenden Oberfläche (8) geregelt wird.

## Claims

1. Paper pulp defibering or refining plate comprising a plate body (8) having a comminuting surface having a large number of ridges (1, 5, 9-12) separated by grooves (13-15), wherein :
- the plate body (8) is made of a first material adapted to provide the general mechanical strength of the plate in use,
- the upper part of the ridges (9-12) is a layer (16-19) of composite material comprising hard abrasion resistant material grains,
characterized in that:
- the layer (16-19) of composite material forming the upper part of the ridges (9-12) is based on hard abrasion resistant material powder bound in a brazing metal alloy whose melting and brazing characteristics are appropriate to laser resurfacing of the first material forming the plate body (8).

2. Defibering or refining plate according to claim 1 characterized in that the plate body (8), the lower part (20-23) of the ridges (9-12) and the bottom of the grooves (24-26) are made of cast iron.

3. Defibering or refining plate according to claim 1 characterized in that the plate body (8), the lower part of the ridges (20-23) and the bottom of the grooves (24-26) are made of stainless steel.

4. Defibering or refining plate according to any one of claims 1 to 3 characterized in that the composite material forming the upper layer (16-19) of the ridges (9-12) comprises grains of tungsten carbide bound in a brazing metal alloy based on nickel, chromium, silicon, iron and boron.

5. Defibering or refining plate according to claim 4 characterized in that the percentage by weight of tungsten carbide contained in the composite material is between 50% and 70%.

6. Defibering or refining plate according to claim 4 or claim 5 characterized in that the tungsten carbide is in the form of substantially spherical grains of tungsten carbide.

7. Method of manufacturing a paper pulp defibering or refining plate, the plate comprising a plate body (8) in a first material adapted to provide the general mechanical strength of the plate in use, the plate body comprising a comminuting surface having a large number of ridges (1, 5, 9-12) separated by grooves (13-15), the method comprising a stage of laser resurfacing of the upper surfaces of the ridges (9-12) using a laser (27) directing a laser beam (28) onto an impact area (32) scanned along the upper surfaces of the ridges to be resurfaced and associated with a powder spray nozzle (33) directing onto the impact area (32) of the laser beam (28) a powder containing hard abrasion resistant material grains, the laser beam (28) having an intensity sufficient to melt the surface of the first material,
characterized in that the powder contains also a brazing metal alloy adapted to be melted by the laser beam (28) and to be brazed to said first material, adhering to the grains forming the hard abrasion resistant material powder, and in that the laser beam (28) has an intensity sufficient to melt the brazing metal alloy powder in the area of impact (32).

8. Method according to claim 7 characterized in that a ridge is resurfaced in a plurality of successive passes during which the impact area (32) of a laser beam (28) and of the powder is moved along the entire length of the ridge, in alternate directions, the laser beam (28) being focused on each pass in an impact area (32) slightly greater than the width of the ridge, the motion of the laser beam (28) relative to the plate body (8) being reversed beyond the ends of the ridge.

9. Method according to claim 7 or claim 8 characterized in that masks (49) of a material which reflects the laser beam (28) are used in areas (48) where the resurfacing is to be interrupted.

10. Method according to claim 7 or claim 8 characterized in that masks (49) of a material absorbing the laser beam (28) and adapted to break down when heated are used in areas (48) where the resurfacing is to be interrupted.

11. Method according to any one of claims 7 to 10 characterized in that a powder spray nozzle (33) coaxial with the laser beam (28) is used to impart to the powder a helical motion coaxial with the laser beam (28) and to concentrate the area of impact of the powder on the area of impact (32) of the laser beam (28) on the ridge to be resurfaced.

12. Method according to any one of claims 7 to 11 characterized in that the size of the resurfacing area is adjusted by varying the area of impact (32) of the laser beam (28) by varying the distance of the focus (F) of the laser beam (28) relative to the surface (8) to be resurfaced.
